# EUROPEAN PATENT APPLICATION

(11) **EP 4 679 616 A1**
(43) Date of publication of application: **14.01.2026**
(21) Application number: 24766175.4
(22) Date of filing: 09.01.2024
(51) Int. Cl.: H01M 50/567, H01M 50/562, H01M 50/55

(54) **METHOD FOR ASSEMBLING COMPOSITE POLE OF CELL WITHOUT TOP COVER**

(30) Priority: 06.03.2023 CN 202310205773
(71) Applicant: Jiangsu RDF Precision Technology Co., Ltd., Changzhou, Jiangsu 213200 (CN)
(72) Inventor: WANG, Yousheng, hangzhou, Jiangsu 213200 (CN)
(74) Representative: Zoli, Filippo
(86) International application number: PCT/CN2024/071299
(87) International publication number: WO 2024/183452

(57) **Abstract**

The present application discloses a method for assembling a composite pole of a cell without a top cover. The method comprises the following assembly steps: 1) providing a fixing ring, arranging a composite pole in a fixing area in a penetrating mode, and enabling a rubber injection opening to be communicated with a rubber-coated area; 2) injecting rubber into the rubber-coated area through the rubber injection opening to form a rubber-coated ring, 3) providing an annular plate, inserting a pole fixing body into a mounting hole, the pole fixing body downwardly abutting against a sealing ring, and fixedly connecting the fixing ring to the annular plate; and 4) fixing a lower plastic member at the bottom of the annular plate. A fixing ring and a composite pole are integrated into one by means of a rubber-coated ring to form an independent component, i.e., a pole fixing body, and after the pole fixing body is mounted on an annular plate, the periphery of the pole fixing body is protected and isolated by means of a lower plastic member. The structure assembly mode is simple, and the costs are low. The problem of complex assembly in the process of assembling a composite pole of a cell without a top cover is solved.

## Description

### TECHNICAL FIELD

The present disclosure relates to the technical field of cells without a top cover, and particularly to a method for assembling a composite terminal of a cell without a top cover.

### BACKGROUND

With the continuous development of power battery and energy storage technology, batteries have been widely used because of their high capacity and other excellent performance. A battery includes a housing, a top cover, a battery core, and the like. The battery core is an electricity storage element of the battery and is arranged inside the housing. An upper end of the housing is provided with an upper end opening. The top cover closes the upper end opening of the housing. Terminals are provided on the top cover. The battery is electrically connected to the outside through the terminals.

At present, since the energy stored in a single cell is not sufficient, a large number of cells need to be assembled together, which poses a challenge to the safety performance. To increase the energy of the battery, a cell without a top cover has been introduced, which includes an annular plate and two side panels. The two side panels cover two sides of the annular plate. An accommodating cavity is defined by the annular plate and the two side panels. A battery core is directly arranged in the accommodating cavity. A composite terminal is arranged in the annular plate.

### SUMMARY

### Technical Problem

In the existing technology, a cell without a top cover, though having high energy, requires a complex assembly process and high costs because the composite terminal needs to be assembled in the annular plate.

### Technical Scheme

An objective of the present disclosure is to provide a method for assembling a composite terminal of a cell without a top cover, to simplify the process of assembling a composite terminal of a cell without a top cover in the existing technology.

The present disclosure provides a method for assembling a composite terminal of a cell without a top cover. The method includes:
1) providing a fixing ring, where a fixing area is defined by the fixing ring; providing a composite terminal which is an integral structure formed by welding a copper part and an aluminum part; inserting the composite terminal into the fixing area, where a lower portion of the composite terminal extends downward out of the fixing area to form a lower segment, a middle portion of the composite terminal is located in the fixing area and forms an encapsulation portion, an annular encapsulation area is provided between the fixing ring and the encapsulation portion, an injection opening is formed at a top of the encapsulation area, and the injection opening is in communication with the encapsulation area;
2) injecting an encapsulation material into the encapsulation area through the injection opening to form an encapsulation ring, where the fixing ring is combined with the composite terminal by the encapsulation ring to form an integral terminal assembly;
3) providing an annular plate, where an enclosed area is defined by the annular plate, and a mounting hole in communication with the enclosed area is provided in the annular plate; placing a seal ring in the fixing area, inserting the terminal assembly into the mounting hole, pressing the terminal assembly downwardly against the seal ring, and fixedly connecting the fixing ring to the annular plate, where a top of the composite terminal is exposed out of the annular plate, and the lower segment extends into the enclosed area; and
4) fixing a lower plastic member at a bottom of the annular plate, where the lower plastic member is located in the enclosed area, the lower plastic member wraps an outer periphery of the lower segment, and a bottom of the lower segment is exposed below the lower plastic member.

Further, the annular plate is integrally formed by stretching, stamping, or extrusion, two terminal assemblies are provided on the annular plate, the annular plate has a plurality of mounting walls configured for mounting the terminal assemblies, and when the two terminal assemblies are mounted on a same mounting wall among of the plurality of mounting walls, a length of the mounting wall is greater than 100 mm; wherein when the two terminal assemblies are respectively mounted on different mounting walls among of the plurality of mounting walls, and a length of the reinforcing wall is greater than 100 mm.

Further, in the step 2), after the encapsulation material is injected into the encapsulation area through the injection opening, a top of the encapsulation ring fills the injection opening and extends to a top of the fixing ring to form a top wrapping ring, where the top wrapping ring is arranged circumferentially around the composite terminal.

Further, in the step 2), an outer periphery of the top wrapping ring extends downward to form an outer wrapping ring wrapping an outer periphery of the fixing ring, where the outer wrapping ring is arranged surrounding the composite terminal.

Further, the fixing ring includes a longitudinal ring arranged annularly, and a top of the longitudinal ring extends toward the fixing area to form a transverse ring arranged annularly; and in the step 2), the top wrapping ring presses against the transverse ring from top to bottom, and the outer wrapping ring wraps an outer periphery of the longitudinal ring.

Further, an upper portion of the mounting hole is recessed and expanded outwardly to form an annular step, and the outer periphery of the composite terminal protrudes outward to form an expansion ring; in the step 2), the encapsulation ring wraps a top of the expansion ring, an outer periphery of the expansion ring, and a bottom of the expansion ring; and in the terminal assembly, the encapsulation ring has a wrapping segment wrapping the bottom of the expansion ring, and the bottom of the expansion ring has an exposed segment in an exposed state.

In the step 3), the seal ring is arranged on the annular step, the wrapping segment presses against the annular step, the exposed segment presses against the seal ring from top to bottom, and the seal ring is in a pressed state.

Further, in the step 3), a bottom of the longitudinal ring presses against the annular step, and the outer periphery of the longitudinal ring presses against an inner side wall of the annular step.

Further, an inner side of the seal ring extends downward to form an upper embedding ring arranged longitudinally; and in the step 3), an annular embedding space is formed between the outer periphery of the composite terminal and an inner side wall of the mounting hole, the upper embedding ring is embedded in an upper portion of the embedding space to respectively press against the inner side wall of the mounting hole and the outer periphery of the composite terminal, and the upper embedding ring is in a pressed state.

In the step 4), the lower plastic member has an annular lower section extending to below the embedding space, and the lower section wraps the outer periphery of the lower segment; a top of the lower section extends upward to form a lower embedding ring, and the lower embedding ring is embedded in the embedding space from bottom to top; an isolation ring is arranged between the lower embedding ring and the upper embedding ring, the isolation ring is arranged surrounding the outer periphery of the composite terminal, the upper embedding ring presses against a top of the isolation ring from top to bottom, and the lower embedding ring presses against a bottom of the isolation ring from bottom to top.

The isolation ring has an inner annular surface facing the outer periphery of the composite terminal, and an annular space is formed between the inner annular surface and the outer periphery of the composite terminal; the isolation ring has an outer annular surface facing the inner side wall of the mounting hole, and the outer annular surface presses against the inner side wall of the mounting hole; and in the step 3), after the seal ring is pressed, a bottom of the seal ring is embedded in and fills the annular space.

Further, the outer annular surface is arranged longitudinally, and the outer annular surface fits to and presses against the inner side wall of the mounting hole; and in a bottom-up direction, the inner annular surface is obliquely arranged away from the outer periphery of the composite terminal, the annular space has a small lower portion and a large upper portion, a bottom of the inner annular surface presses against the outer periphery of the composite terminal, a plurality of protrusions configured to be embedded in the seal ring are provided on the inner annular surface, and the plurality of protrusions are arranged circumferentially around the composite terminal.

Further, the outer periphery of the composite terminal is recessed inward to form a spherical recess groove, the recess groove has a recess opening formed at the position at which the expansion ring is connected to the composite terminal, a movable special-shaped block is arranged in the recess groove, and a filling space is formed between the special-shaped block and an inner side wall of the recess groove; and the longitudinal ring is provided with a plurality of through holes, and the encapsulation area is in communication with outside through the through holes.

In the step 2), after the encapsulation material is injected into the encapsulation area through the injection opening, the encapsulation ring has an inner limiting portion extending into the recess groove, and the inner limiting portion wraps the entire special-shaped block and fills up the entire recess groove to limit the special-shaped block from being detached from the recess groove; and the encapsulation ring has an outer limiting portion extending into the through holes, and the outer limiting portion fills up the through holes.

The encapsulation ring has an outer ring portion wrapping the outer periphery of the expansion ring; the encapsulation ring has a top ring portion wrapping the top of the expansion ring; and an outer end of the outer limiting portion is integrally connected to the outer ring portion, and an inner end of the outer limiting portion is integrally connected to the top ring portion.

### Beneficial Effects

The embodiments of the present disclosure have the following beneficial effects.

Compared with the existing technology, according to the method for assembling a composite terminal of a cell without a top cover, the fixing ring is combined with the composite terminal by the encapsulation ring to form an independent component, i.e., the terminal assembly. After the terminal assembly is mounted on the annular plate, an outer periphery of the terminal assembly is protected and isolated by the lower plastic member. Such a structure is easy to assemble and cost-effective. As such, the process of assembling a composite terminal of a cell without a top cover is simplified.

### BRIEF DESCRIPTION OF DRAWINGS

To describe the technical schemes of the embodiments of the present disclosure or the related art more clearly, the following briefly introduces the accompanying drawings required for describing the embodiments or the existing technology. Apparently, the accompanying drawings in the following description show only some embodiments of the present disclosure, and those having ordinary skills in the art may still derive other drawings from these accompanying drawings without creative efforts.

In the drawings:
FIG. 1 is a schematic perspective view of an annular plate according to the present disclosure;
FIG. 2 is a partial schematic sectional view showing connection between an annular plate, a terminal assembly, a seal ring, and a lower plastic member according to the present disclosure;
FIG. 3 is a schematic perspective view of a fixing ring according to the present disclosure;
FIG. 4 is a schematic sectional view of a terminal assembly according to the present disclosure; and
FIG. 5 is a schematic sectional view of an isolation ring according to the present disclosure.

In the drawings, the reference numerals respectively represent: annular plate 100, fixing ring 200, composite terminal 300, mounting hole 400, encapsulation ring 500, seal ring 600, lower plastic member 700, isolation ring 800, enclosed area 101, longitudinal ring 201, transverse ring 202, through hole 203, injection opening 204, expansion ring 301, recess groove 302, special-shaped block 303, upper embedding ring 601, inner annular surface 801, outer annular surface 802, protrusion 803.

### DETAILED DESCRIPTION

The technical schemes in the embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by those having ordinary skills in the art based on the embodiments of the present disclosure without making creative efforts shall fall within the protection scope of the present disclosure.

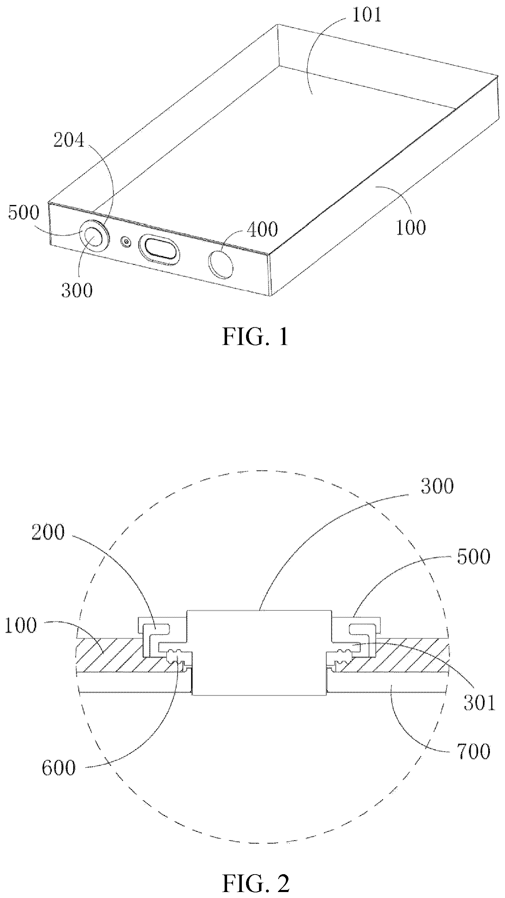

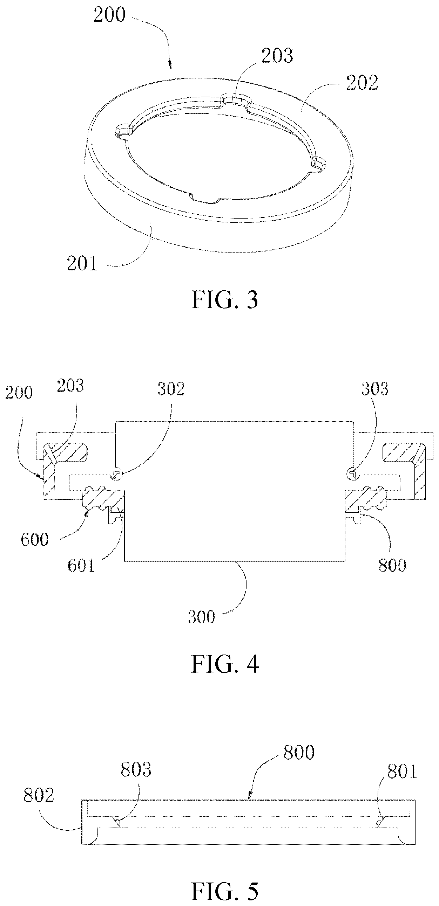

FIG. 1 to FIG. 5 show preferred embodiments of the present disclosure.

A method for assembling a composite terminal of a cell without a top cover is provided. The method includes:
1) providing a fixing ring 200, where a fixing area is defined by the fixing ring 200; providing a composite terminal 300 which is an integral structure formed by welding a copper part and an aluminum part; inserting the composite terminal 300 into the fixing area, where a lower portion of the composite terminal 300 extends downward out of the fixing area to form a lower segment, a middle portion of the composite terminal 300 is located in the fixing area and forms an encapsulation portion, an annular encapsulation area is provided between the fixing ring 200 and the encapsulation portion, an injection opening 204 is formed at a top of the encapsulation area, and the injection opening 204 is in communication with the encapsulation area;
2) injecting an encapsulation material into the encapsulation area through the injection opening 204 to form an encapsulation ring 500, where the fixing ring 200 is combined with the composite terminal 300 by the encapsulation ring 500 to form an integral terminal assembly;
3) providing an annular plate 100, where an enclosed area 101 is defined by the annular plate 100, and a mounting hole 400 in communication with the enclosed area 101 is provided in the annular plate 100; placing a seal ring 600 in the fixing area, inserting the terminal assembly into the mounting hole 400, pressing the terminal assembly downwardly against the seal ring 600, and fixedly connecting the fixing ring 200 to the annular plate 100, where a top of the composite terminal 300 is exposed out of the annular plate 100, and the lower segment extends into the enclosed area 101; and
4) fixing a lower plastic member 700 at a bottom of the annular plate 100, where the lower plastic member 700 is located in the enclosed area 101, the lower plastic member 700 wraps an outer periphery of the lower segment, and a bottom of the lower segment is exposed below the lower plastic member 700.

According to the method for assembling a composite terminal of a cell without a top cover, the fixing ring 200 is combined with the composite terminal 300 by the encapsulation ring 500 to form an independent component, i.e., the terminal assembly. After the terminal assembly is mounted on the annular plate 100, an outer periphery of the terminal assembly is protected and isolated by the lower plastic member 700. Such a structure is easy to assemble and cost-effective. As such, the process of assembling a composite terminal 300 of a cell without a top cover is simplified.
a method for connecting the fixing ring 200 and the annular plate 100 includes welding, riveting, and/or pressure reverting flanging.

The annular plate 100 is integrally formed by stretching, stamping, or extrusion. Two terminal assemblies are provided on the annular plate 100. The annular plate 100 has a plurality of mounting walls configured for mounting the terminal assemblies. When the two terminal assemblies are mounted on the same mounting wall, a length of the mounting wall is greater than 100 mm. When the two terminal assemblies are respectively mounted on different mounting walls, a reinforcing wall is perpendicularly formed between the different mounting walls, and a length of the reinforcing wall is greater than 100 mm. As such, the structural strength of the annular plate 100 can be increased.

In this embodiment, in the step 2), after the encapsulation material is injected into the encapsulation area through the injection opening 204, a top of the encapsulation ring 500 fills the injection opening 204 and extends to a top of the fixing ring 200 to form a top wrapping ring, where the top wrapping ring is arranged circumferentially around the composite terminal 300.

The encapsulation ring 500 isolates and seals the composite terminal 300 and the top of the fixing ring 200 through the top wrapping ring, such that the composite terminal 300 can be separated from the fixing ring 200, to prevent the composite terminal 300 from being connected to the fixing ring 200, which may otherwise lead to a short circuit of the cell after the fixing ring 200 is connected to the annular plate 100. In addition, the encapsulation ring 500 seals the composite terminal 300, to prevent foreign matters from entering to affect the connection between the composite terminal 300 and the cell.

In this embodiment, in the step 2), an outer periphery of the top wrapping ring extends downward to form an outer wrapping ring wrapping an outer periphery of the fixing ring 200, where the outer wrapping ring is arranged surrounding the composite terminal 300.

The top wrapping ring uses the outer wrapping ring to protect the outer periphery of the composite terminal 300 to prevent the composite terminal 300 from being directly connected to the annular plate 100 to cause a short circuit of the cell.

In this embodiment, the fixing ring 200 includes a longitudinal ring 201 arranged annularly, and a top of the longitudinal ring 201 extends toward the fixing area to form a transverse ring 202 arranged annularly; and in the step 2), the top wrapping ring presses against the transverse ring 202 from top to bottom, and the outer wrapping ring wraps an outer periphery of the longitudinal ring 201.

Because the top wrapping ring presses against the transverse ring 202, the isolation of the top of the fixing ring 200 from the top of the composite terminal 300 can be enhanced, increase thereby increasing the safety of the composite terminal 300. Because the outer wrapping ring wraps the outer periphery of the longitudinal ring 201, the isolation of the fixing ring 200 from the composite terminal 300 can be enhanced, to prevent the composite terminal 300 from directly coming into contact with the fixing ring 200, thereby preventing the fixing ring 200 from being connected to the composite terminal 300 as much as possible.

In this embodiment, an upper portion of the mounting hole 400 is recessed and expanded outwardly to form an annular step, and the outer periphery of the composite terminal 300 protrudes outward to form an expansion ring 301; in the step 2), the encapsulation ring 500 wraps a top of the expansion ring 301, an outer periphery of the expansion ring 301, and a bottom of the expansion ring 301; and in the terminal assembly, the encapsulation ring 500 has a wrapping segment wrapping the bottom of the expansion ring 301, and the bottom of the expansion ring 301 has an exposed segment in an exposed state.

In the step 3), the seal ring 600 is arranged on the annular step, the wrapping segment presses against the annular step, the exposed segment presses against the seal ring 600 from top to bottom, and the seal ring 600 is in a pressed state.

A supporting position of the expansion ring 301 of the composite terminal 300 is isolated from the annular step of the annular plate 100 by the seal ring 600, to prevent the exposed segment of the expansion ring 301 from being directly connected to the annular step of the annular plate 100, thereby improving the isolation and sealing performance between the composite terminal 300 and the annular plate 100.

In this embodiment, in the step 3), a bottom of the longitudinal ring 201 presses against the annular step, and the outer periphery of the longitudinal ring 201 presses against an inner side wall of the annular step.

As such, after the fixing ring 200 is connected to the composite terminal 300 through the encapsulation ring 500, the seal ring 600 is mounted on the composite terminal 300, and finally the fixing ring 200 is welded, mounted, or bonded to the annular plate 100. Such a design has a simple structure which is easy to manufacture, facilitates the mounting of the composite terminal 300, and is cost-effective.

In this embodiment, an inner side of the seal ring 600 extends downward to form an upper embedding ring 601 arranged longitudinally; and in the step 3), an annular embedding space is formed between the outer periphery of the composite terminal 300 and an inner side wall of the mounting hole 400, the upper embedding ring 601 is embedded in an upper portion of the embedding space to respectively press against the inner side wall of the mounting hole 400 and the outer periphery of the composite terminal 300, and the upper embedding ring 601 is in a pressed state.

In the step 4), the lower plastic member 700 has an annular lower section extending to below the embedding space, and the lower section wraps the outer periphery of the lower segment. A top of the lower section extends upward to form a lower embedding ring, and the lower embedding ring is embedded in the embedding space from bottom to top. An isolation ring 800 is arranged between the lower embedding ring and the upper embedding ring 601. The isolation ring 800 is arranged surrounding the outer periphery of the composite terminal 300. The upper embedding ring 601 presses against a top of the isolation ring 800 from top to bottom. The lower embedding ring presses against a bottom of the isolation ring 800 from bottom to top.

The isolation ring 800 has an inner annular surface 801 facing the outer periphery of the composite terminal 300. An annular space is formed between the inner annular surface 801 and the outer periphery of the composite terminal 300. The isolation ring 800 has an outer annular surface 802 facing the inner side wall of the mounting hole 400. The outer annular surface 802 presses against the inner side wall of the mounting hole 400. In the step 3), after the seal ring 600 is pressed, a bottom of the seal ring 600 is embedded in and fills the annular space.

The seal ring 600 mounted on the composite terminal 300 can be positioned by the upper embedding ring 601, and the outer periphery of the composite terminal 300 can be isolated from the inner side wall of the annular step by the upper embedding ring 601, to prevent the composite terminal 300 from being directly connected to the annular step formed on the annular plate 100. When the upper embedding ring 601 is in the pressed state, the upper embedding ring 601 deforms toward a gap on the outer periphery of the composite terminal 300, thereby increasing the sealing performance of the composite terminal 300. The outer periphery of the composite terminal 300 can be stably held by the lower plastic member 700, and the lower plastic member 700 can also isolate and protect the annular plate 100 and the composite terminal 300, thereby improving the safety of the composite terminal 300.

The gap between the lower embedding ring and the upper embedding ring 601 can be closed and sealed by the isolation ring 800, to prevent the outer periphery of the composite terminal 300 from coming into contact with the annular step.

In this embodiment, the outer annular surface 802 is arranged longitudinally, and the outer annular surface 802 fits to and presses against the inner side wall of the mounting hole 400. In a bottom-up direction, the inner annular surface 801 is obliquely arranged away from the outer periphery of the composite terminal 300, the annular space has a small lower portion and a large upper portion, a bottom of the inner annular surface 801 presses against the outer periphery of the composite terminal 300, a plurality of protrusions 803 configured to be embedded in the seal ring 600 are provided on the inner annular surface 801, and the plurality of protrusions 803 are arranged circumferentially around the composite terminal 300.

The isolation ring 800 strengthens the fitting stability between the isolation ring 800 and the mounting hole 400 through the outer annular surface 802 pressing against the inner side wall of the mounting hole 400, and the isolation ring 800 enhances the connection between the isolation ring 800 and the seal ring 600 through the protrusions 803.

In this embodiment, the outer periphery of the composite terminal 300 is recessed inward to form a spherical recess groove 302, the recess groove 302 has a recess opening formed at the position at which the expansion ring 301 is connected to the composite terminal 300, a movable special-shaped block 303 is arranged in the recess groove 302, and a filling space is formed between the special-shaped block 303 and an inner side wall of the recess groove 302; and the longitudinal ring 201 is provided with a plurality of through holes 203, and the encapsulation area is in communication with outside through the through holes 203.

In the step 2), after the encapsulation material is injected into the encapsulation area through the injection opening 204, the encapsulation ring 500 has an inner limiting portion extending into the recess groove 302, and the inner limiting portion wraps the entire special-shaped block 303 and fills up the entire recess groove 302 to limit the special-shaped block 303 from being detached from the recess groove 302. The encapsulation ring 500 has an outer limiting portion extending into the through holes 203, and the outer limiting portion fills up the through holes 203.

The encapsulation ring 500 has an outer ring portion wrapping the outer periphery of the expansion ring 301. The encapsulation ring 500 has a top ring portion wrapping the top of the expansion ring 301. An outer end of the outer limiting portion is integrally connected to the outer ring portion, and an inner end of the outer limiting portion is integrally connected to the top ring portion.

Through the formation of the filling space in the composite terminal 300, the inner limiting portion of the encapsulation ring 500 is formed in the filling space, to enhance the connection between the encapsulation ring 500 and the composite terminal 300, such that the encapsulation ring 500 is not easily detached from the composite terminal 300. Because the outer limiting portion of the encapsulation ring 500 fills up the entire through hole 203, the connection between the encapsulation ring 500 and the fixing ring 200 is enhanced, such that the fixing ring 200 is not easily separated from the encapsulation ring 500.

## Claims

1. A method for assembling a composite terminal of a cell without a top cover, comprising:
1) providing a fixing ring, wherein a fixing area is defined by the fixing ring; providing a composite terminal which is an integral structure formed by welding a copper part and an aluminum part; inserting the composite terminal into the fixing area, wherein a lower portion of the composite terminal extends downward out of the fixing area to form a lower segment, a middle portion of the composite terminal is located in the fixing area and forms an encapsulation portion, an annular encapsulation area is provided between the fixing ring and the encapsulation portion, an injection opening is formed at a top of the encapsulation area, and the injection opening is in communication with the encapsulation area;
2) injecting an encapsulation material into the encapsulation area through the injection opening to form an encapsulation ring, wherein the fixing ring is combined with the composite terminal by the encapsulation ring to form an integral terminal assembly;
3) providing an annular plate, wherein an enclosed area is defined by the annular plate, and a mounting hole in communication with the enclosed area is provided in the annular plate; placing a seal ring in the fixing area, inserting the terminal assembly into the mounting hole, pressing the terminal assembly downwardly against the seal ring, and fixedly connecting the fixing ring to the annular plate, wherein a top of the composite terminal is exposed out of the annular plate, and the lower segment extends into the enclosed area; and
4) fixing a lower plastic member at a bottom of the annular plate, wherein the lower plastic member is located in the enclosed area, the lower plastic member wraps an outer periphery of the lower segment, and a bottom of the lower segment is exposed below the lower plastic member;
wherein the annular plate is integrally formed by stretching, stamping, or extrusion; two terminal assemblies are provided on the annular plate, the annular plate has a plurality of mounting walls configured for mounting the terminal assemblies, and when the two terminal assemblies are mounted on a same mounting wall among of the plurality of mounting walls, a length of the mounting wall is greater than 100 mm; wherein when the two terminal assemblies are respectively mounted on different mounting walls among of the plurality of mounting walls, a reinforcing wall is perpendicularly formed between the different mounting walls, and a length of the reinforcing wall is greater than 100 mm;
wherein in the step 2), after the encapsulation material is injected into the encapsulation area through the injection opening, a top of the encapsulation ring fills the injection opening and extends to a top of the fixing ring to form a top wrapping ring, wherein the top wrapping ring is arranged circumferentially around the composite terminal;
wherein in the step 2), an outer periphery of the top wrapping ring extends downward to form an outer wrapping ring wrapping an outer periphery of the fixing ring, wherein the outer wrapping ring is arranged surrounding the composite terminal;
wherein the fixing ring comprises a longitudinal ring arranged annularly, and a top of the longitudinal ring extends toward the fixing area to form a transverse ring arranged annularly; wherein in the step 2), the top wrapping ring presses against the transverse ring from top to bottom, and the outer wrapping ring wraps an outer periphery of the longitudinal ring;
wherein an upper portion of the mounting hole is recessed and expanded outwardly to form an annular step, and the outer periphery of the composite terminal protrudes outward to form an expansion ring; wherein in the step 2), the encapsulation ring wraps a top of the expansion ring, an outer periphery of the expansion ring, and a bottom of the expansion ring; wherein in the terminal assembly, the encapsulation ring has a wrapping segment wrapping the bottom of the expansion ring, and the bottom of the expansion ring has an exposed segment in an exposed state; and
wherein in the step 3), the seal ring is arranged on the annular step, the wrapping segment presses against the annular step, the exposed segment presses against the seal ring from top to bottom, and the seal ring is in a pressed state.

2. The method for assembling a composite terminal of a cell without a top cover of claim 1, wherein in the step 3), a bottom of the longitudinal ring presses against the annular step, and the outer periphery of the longitudinal ring presses against an inner side wall of the annular step.

3. The method for assembling a composite terminal of a cell without a top cover of claim 1, wherein an inner side of the seal ring extends downward to form an upper embedding ring arranged longitudinally; in the step 3), an annular embedding space is formed between the outer periphery of the composite terminal and an inner side wall of the mounting hole, the upper embedding ring is embedded in an upper portion of the embedding space to respectively press against the inner side wall of the mounting hole and the outer periphery of the composite terminal, and the upper embedding ring is in a pressed state;
in the step 4), the lower plastic member has an annular lower section extending to below the embedding space, and the lower section wraps the outer periphery of the lower segment; a top of the lower section extends upward to form a lower embedding ring, and the lower embedding ring is embedded in the embedding space from bottom to top; an isolation ring is arranged between the lower embedding ring and the upper embedding ring, the isolation ring is arranged surrounding the outer periphery of the composite terminal, the upper embedding ring presses against a top of the isolation ring from top to bottom, and the lower embedding ring presses against a bottom of the isolation ring from bottom to top;
the isolation ring has an inner annular surface facing the outer periphery of the composite terminal, and an annular space is formed between the inner annular surface and the outer periphery of the composite terminal; the isolation ring has an outer annular surface facing the inner side wall of the mounting hole, and the outer annular surface presses against the inner side wall of the mounting hole; and in the step 3), after the seal ring is pressed, a bottom of the seal ring is embedded in and fills the annular space.

4. The method for assembling a composite terminal of a cell without a top cover of claim 3, wherein the outer annular surface is arranged longitudinally, and the outer annular surface fits to and presses against the inner side wall of the mounting hole; and in a bottom-up direction, the inner annular surface is obliquely arranged away from the outer periphery of the composite terminal, the annular space has a small lower portion and a large upper portion, a bottom of the inner annular surface presses against the outer periphery of the composite terminal, a plurality of protrusions configured to be embedded in the seal ring are provided on the inner annular surface, and the plurality of protrusions are arranged circumferentially around the composite terminal.

5. The method for assembling a composite terminal of a cell without a top cover of claim 1, wherein the outer periphery of the composite terminal is recessed inward to form a spherical recess groove, the recess groove has a recess opening formed at a position at which the expansion ring is connected to the composite terminal, a movable special-shaped block is arranged in the recess groove, and a filling space is formed between the special-shaped block and an inner side wall of the recess groove; the longitudinal ring is provided with a plurality of through holes, and the encapsulation area is in communication with outside through the through holes;
in the step 2), after the encapsulation material is injected into the encapsulation area through the injection opening, the encapsulation ring has an inner limiting portion extending into the recess groove, and the inner limiting portion wraps the entire special-shaped block and fills up the entire recess groove to limit the special-shaped block from being detached from the recess groove; the encapsulation ring has an outer limiting portion extending into the through holes, and the outer limiting portion fills up the through holes; and
the encapsulation ring has an outer ring portion wrapping the outer periphery of the expansion ring; the encapsulation ring has a top ring portion wrapping the top of the expansion ring; and an outer end of the outer limiting portion is integrally connected to the outer ring portion, and an inner end of the outer limiting portion is integrally connected to the top ring portion.
